Europäisches Patentamt

European Patent Office

Office européen des brevets

(19)

(11) **EP 0 606 375 B1**

(12) **FASCICULE DE BREVET EUROPEEN**

(45) Date de publication et mention
de la délivrance du brevet:
**22.04.1998 Bulletin 1998/17**

(21) Numéro de dépôt: 92921535.8

(22) Date de dépôt: 23.09.1992

(51) Int. Cl.$^6$: **B29C 70/00**, D03D 41/00

(86) Numéro de dépôt international:
**PCT/FR92/00884**

(87) Numéro de publication internationale:
**WO 93/05950** (01.04.1993 Gazette 1993/09)

(54) **PROCEDE ET MACHINE POUR LA FABRICATION D'UN MATERIAU COMPOSITE A STRUCTURE TRIDIMENSIONNELLE DE FIBRES CONTINUES DE RENFORCEMENT**

VERFAHREN UND VORRICHTUNG ZUR HERSTELLUNG VON MIT DREIDIMENSIONAL STRUKTURIERTEN KONTINUIERLICHEN FASERN VERSTÄRKTEN VERBUNDWERKSTOFFEN

PROCESS AND MACHINE FOR THE MANUFACTURE OF A COMPOSITE MATERIAL REINFORCED WITH A THREE DIMENSIONAL CONTINUOUS FIBRE STRUCTURE

(84) Etats contractants désignés:
**DE ES GB IT SE**

(30) Priorité: **24.09.1991 FR 9111768**

(43) Date de publication de la demande:
**20.07.1994 Bulletin 1994/29**

(73) Titulaire: **MATERIALS TECHNICS
1631 Luxembourg (LU)**

(72) Inventeurs:
• **BERGER, Michel
104, La Lande
F-33480 Castelnau-de-Médoc (FR)**

• **CHAUVELIER, Claude
6, route de Boutigny
F-91820 Boutigny (FR)**

(74) Mandataire: **Dronne, Guy et al
Cabinet Beau de Loménie
158, rue de l'Université
75340 Paris Cédex 07 (FR)**

(56) Documents cités:
EP-A- 0 166 631          EP-A- 0 258 477
US-A- 4 038 440

• PATENT ABSTRACTS OF JAPAN vol. 13, no. 229
(M-831)(3577) 26 Mai 1989& JP-A-1 044 736
(SHIKISHIMA KANBASU) 17 February 1989

## Description

La présente invention a pour objet un procédé pour la fabrication d'un matériau composite à structure tridimensionnelle de fibres continues de renforcement selon le préambule de la revendication 1, et une machine pour la mise en oeuvre dudit procédé selon le préambule de la revendication 5.

Un tel procédé et une telle machine sont connus du document EP-A-0 166 631 pour la fabrication en continu par tricotage tridimensionnel de profilés en matériau composite.

Il est connu que les matériaux composites sont constitués de fibres de renforcement de nature différente qui sont dispersées dans une matrice. Les fibres de renforcement sont des fibres organiques ou inorganiques telles que les fibres de nylon, les fibres de carbone, les fibres de verre, les fibres de carbure de silicium, les fibres de bore, et... Les matrices utilisées sont elles-mêmes de nature organique ou inorganique comme les matrices en résine, par exemple en polyester ou en polyépoxyde. La matrice peut comporter des charges diverses telles que, par exemple, de la poudre de graphite, de la poudre de titane, de la poudre de céramique, et...

Ces matériaux connaissent une utilisation de plus en plus fréquente, cependant, les modes de réalisation jusqu'ici connus sont insuffisants quant à leur structure fibreuse de renforcement pour être utilisés dans beaucoup d'applications envisageables.

Jusqu'ici ces matériaux composites à renforcement fibreux sont généralement obtenus par empilement de couches minces de renfort sous forme de tissus ou de nappes de fibres ou de mèches applaties qui sont liées par la résine. Dans une telle structure, il y a au mieux isotropie de répartition du renfort dans le plan d'empilement ou dans la surface d'empilement (moulage en forme, enroulement filamentaire, etc...). Tous ces matériaux sont de type à renforcement surfacique. Il existe également des tissus spéciaux de, renforcement où l'on a disposé des fibres perpendiculairement au plan de tissage qui sont alors du type volumique. Cependant, dans ce cas, la quantité et/ou la longueur des fibres perpendiculaires au plan d'empilement ne permet jamais d'atteindre l'isotropie des propriétés mécaniques dans les trois dimensions.

On peut également trouver des procédés de tissage tridimensionnels qui permettent d'obtenir un renforcement isotrope, c'est-à-dire un renforcement présentant des propriétés mécaniques sensiblement identiques selon les trois axes orthogonaux de coordonnées. Cependant, ces structures de renforcement présentent un taux de renfort par rapport à l'ensemble du composite qui demeure globalement faible en restant inférieur à 33 %.

On voit donc qu'il existe effectivement un besoin réel de disposer de matériaux composites à structure de renforcement présentant, d'une part, des propriétés isotropiques ou qui peuvent être isotropiques, et qui, d'autre part, présentent un taux de renforcement à l'aide des fibres qui soit sensiblement supérieur à 33 %.

Un objet de la présente invention est de réaliser un matériau composite satisfaisant aux conditions énoncées ci-dessus, c'est-à-dire susceptible de présenter une très bonne isotropie de résistance mécanique, c'est-à-dire une disposition régulière selon les trois axes de coordonnées en ce qui concerne la structure fibreuse de renforcement et qui, de surcroît, présente un taux de renforcement par rapport à la matrice du matériau composite qui soit sensiblement supérieur à 33 %.

Pour atteindre ce but, la présente invention propose un procédé selon la revendication 1 et une machine selon la revendication 5.

Grâce au procédé selon l'invention, il est effectivement possible d'obtenir une structure de fibres de renforcement isotrope. En effet, le pas du faisceau de fibres à proximité de la première extrémité est choisi de telle manière que les pas p' et q' soient suffisamment importants pour permettre la mise en place aisée successivement des nappes de fibres, à l'aide d'aiguilles, selon les directions X et Y. Lors du déplacement de chacune des nappes de la preière extrémité vers la deuxième extrémité, on provoque simultanément un rapprochement mutuel des fibres, ce rapprochement étant poursuivi jusqu'à ce que l'écartement entre les fibres de la nappe atteigne le pas p ou q voulu pour la structure finale de renforcement. Cette opération étant effectuée pour les nappes de fibres selon la direction X et pour les nappes de fibres selon la direction Y on obtient ainsi effectivement une structure de renforcement isotrope. En outre, en définissant les pas p et q et la distance r de la structure de renforcement avec des valeurs convenables, il est possible d'obtenir un taux de renfort isotrope supérieur à 50 % du volume total du matériau composite.

En adaptant la valeur des paramètres p, q et r à la nature des fibres, on peut, selon le but recherché, obtenir une structure de renforcement totalement isotrope ou présentant une anisotropie contrôlable et aux taux final de renforcement élevé.

Selon un mode préféré de réalisation de la machine, les premiers moyens de maintien comprennent une plaque parallèle aux plans X, Y et munie d'une pluralité de canons cylindriques ayant leurs axes disposés selon la direction Z, une fibre du faisceau passant dans chaque canon, lesdits canons étant disposés selon les directions X et Y pour présenter entre eux les pas p' et q', lesdits canons faisant saillie hors de ladite plaque.

Grâce à la présence des canons qui font saillie hors de la plaque, les aiguilles qui sont déplacées selon les directions X, Y sont guidées par les canons. Cela rend effectivement possible la mise en place des nappes successives de fibres, ce qui soulèverait de très gros problèmes en leur absence.

D'autres caractéristiques et avantages de l'invention apparaîtront plus clairement à la lecture de la description qui suit d'un mode préféré de mise en oeuvre de l'invention donné à titre d'exemple non limitatif. La description se réfère aux dessins annexés sur lesquels :

la figure 1 est une vue partielle en perspective de la machine montrant les moyens de maintien du faisceau de fibres ;

les figures 3, 4 et 5 montrent les différentes étapes de mise en place d'une nappe de fibres selon la direction Y ;

les figures 6a, 6b et 6c illustrent les différentes étapes du déplacement d'une nappe de fibres selon la direction Y ;

les figures 7a à 7d montrent en perspective, sous une forme simplifiée, les positions successives des moyens support et des moyens de déplacement des nappes de fibres ;

la figure 8 illustre l'étape d'imprégnation et montre différentes positions des moyens de déplacement des nappes de fibres ;

la figure 9 montre les moyens de support et de déplacement des nappes de fibres dans leur position finale ;

la figure 10 est une vue en perspective montrant la structure de base de fibres de renforcement obtenue par la mise en oeuvre de l'invention.

la figure 11 montre un exemple détaillé de réalisation des moyens de déplacement des moyens support ; et

la figure 12 montre en perspective la structure de fibres de renforcement obtenue.

Comme on l'a dèjà indiqué, la machine de réalisation de matériaux composites comprend, d'une part, des moyens pour mettre en place un faisceau de fibres selon la direction générale Z ; des moyens pour mettre en place des nappes de fibres successivement selon les directions X et Y ; des moyens pour déplacer chaque nappe d'une première extrémité à une deuxième extrémité de la machine tout en provoquant un rapprochement des fibres de chaque nappe ; des moyens pour réaliser une imprégnation des fibres de la nappe lors de son déplacement et des moyens pour maintenir rapprochés les fibres des nappes successivement déplacées vers la deuxième extrémité de la machine. On va successivement décrire les différentes parties de la machine.

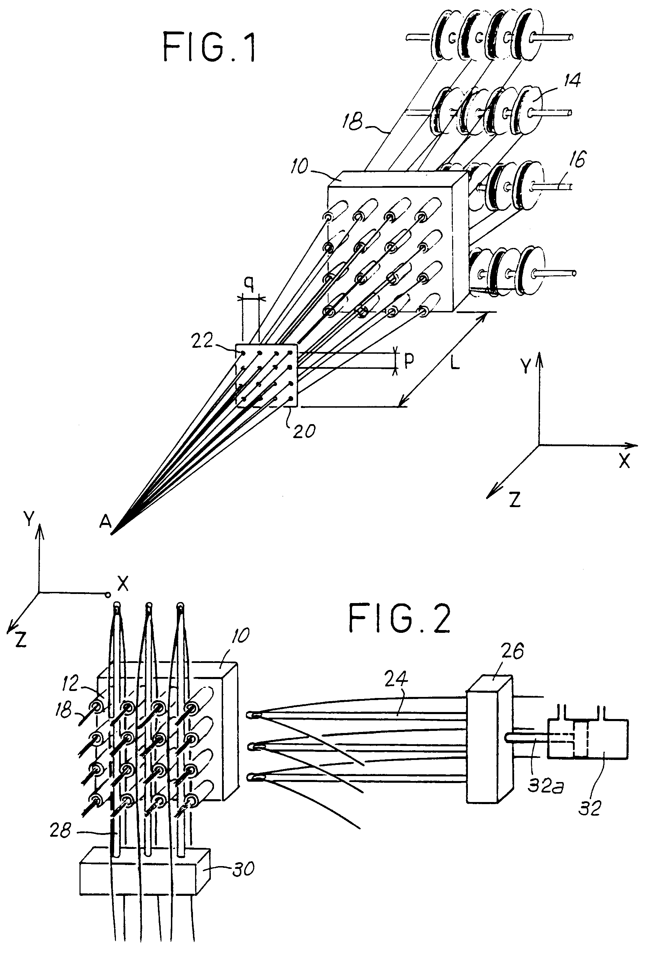

La figure 1 représente les moyens de mise en place du faisceau de fibres. Sur cette figure, on a représenté une plaque 10 qui est disposée parallèlement aux axes X, Y. Cette plaque est percée de trous dans lesquels sont engagés des canons de tissage tels que 12. Ces canons de tissage sont cylindriques et ont un axe parallèle à la direction Z. Les canons sont disposés avec un pas q' selon la direction X et un pas p' selon la direction Y. En arrière de la plaque 10, on trouve des bobines telles que 14 qui sont montées sur des axes 16. Les bobines 14 supportent des fibres de renforcement telles que 18. Il y a, bien sûr, autant de bobines 14 que de canons 12. Les moyens de maintien comportent également une plaque 20 de conformation qui constitue la deuxième extrémité de la machine. Cette plaque est parallèle aux directions X et Y, et donc parallèle à la plaque 10. La plaque 20 est percée d'orifices 22 dont le nombre est égal au nombre de canons 12. Les orifices 22 sont disposés avec un pas q selon la direction X et un pas p selon la direction Y. Les pas p et q définissent l'écartement des fibres selon la direction Z dans la structure finale de renforcement du matériau composite. Les deux plaques 20 et 10 sont séparées par une distance L. Le pas q est inférieur au pas q' et le pas p est inférieur au pas p'. Comme on le voit, sur la figure 1, chaque fibre 18 du faisceau passe dans un canon 12 et dans l'orifice correspondant 22 de la plaque de conformation 20. L'ensemble des fibres, à leurs extrémités libres, sont maintenues au point A. Il faut encore préciser que les bobines 14 sont associées à des moyens de freinage non représentés permettant d'assurer une tension constante des fibres 18 du faisceau quelques soient les contraintes externes qui leur soient appliquées. Le faisceau de fibres 18 a donc la forme d'un tronc de pyramide, les fibres sont réparties en couches selon la direction X et selon la direction Y. Les couches laissent entre elles des couloirs qui vont en se rétrécissant de la plaque 10 à la plaque 20. Il faut préciser que le point de fixation A et la plaque de conformation 20 ne servent qu'à la mise en place initiale du faisceau de fibres selon la direction Z. Comme on l'expliquera plus en détails ultérieurement le rôle joué initialement par la plaque 20, maintien de l'écartement des fibres, est joué par les nappes de fibres rapprochées en X et Y au fur et à mesure de leur déplacement de la longueur L en arrivant à proximité de la plaque 20.

La figure 2 montre une partie des moyens permettant la mise en place de nappes de fibres respectivement selon les directions X et Y, c'est-à-dire parallèlement à la plaque à canons 10. Ces moyens sont constitués par des aiguilles telles que 24 montées sur un porte-aiguilles 26 en ce qui concerne la direction X et par des aiguilles 28 portées par le porte-aiguilles 30 pour la direction Y. Les aiguilles 24 peuvent être déplacées selon la direction X par exemple sous l'effet de l'actionnement du vérin 32 dont la tige 32a est solidaire du porte-aiguilles 26. Les aiguilles se déplacent dans un plan parallèle aux axes X et Y et peuvent passer entre les lignes de canons 12 en ce qui concerne les aiguilles 24 et entre les colonnes de canons 12 en ce qui concerne les aiguilles 28. Comme on l'a déjà indiqué, les aiguilles sont guidées dans leur translation par les canons.

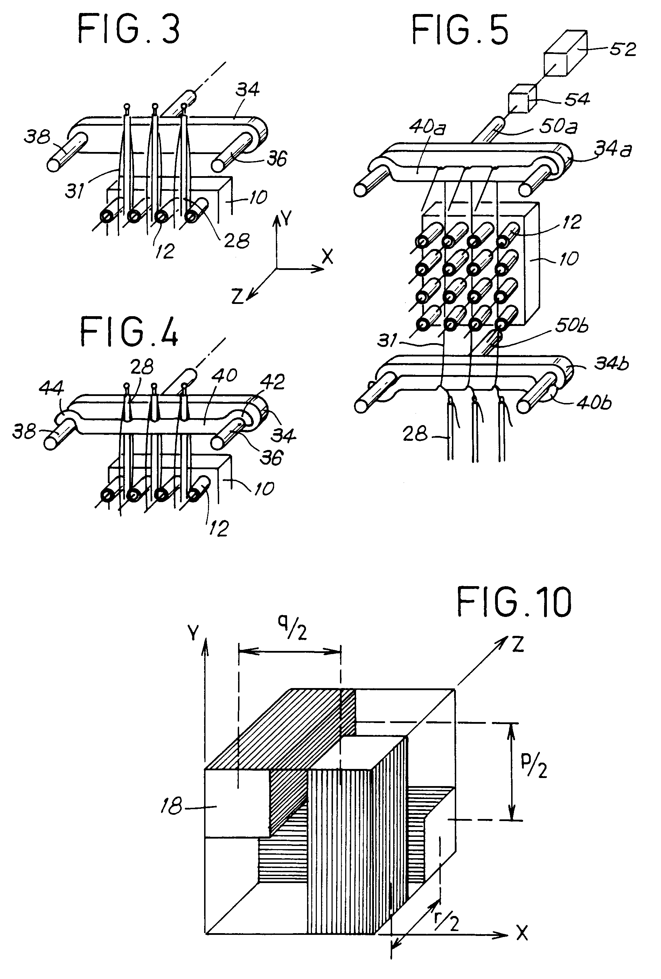

En se référant plus particulièrement aux figures 3 à 5, on va décrire le mode de mise en place initial d'une nappe plane de fibres référencées 31, les fibres étant parallèles à la direction Y. Pour cela les aiguilles 28 sont engagées entre les canons 12. Des fourches 34 comportent à chacune de leur extrémité un ergot 36, 38 sur lesquels sont engagées les extrémités de peigne 40. Les peignes 40 comportent à leurs extrémités des encoches incurvées 42 et 44 pour être engagés librement sur les ergots 36 et 38. Les peignes 40 comportent des encoches 46 en nombre égal à celui des fibres de la nappe selon la direction Y. Le peigne 40 avec ses encoches 46 sert à retenir les fibres 31 après le passage des aiguilles 28. La figure 5 montre, que pour la réalisation de la nappe de fibres 31 parallèle à la direction Y, il y a, bien sûr, en fait, deux fourches 34a et 34b disposées de part et d'autre de la plaque à canon 10. Dans leur position initiale, les fourches 34a et 34b sont bien sûr à proximité immédiate de la face avant de la plaque 10 puisque les aiguilles 28 doivent passer entre les canons 12. Chaque fourche 34a et 34b est associée à un peigne 40a et 40b sur lesquels passent les fibres 31 pour former une nappe parallèle à la direction Y.

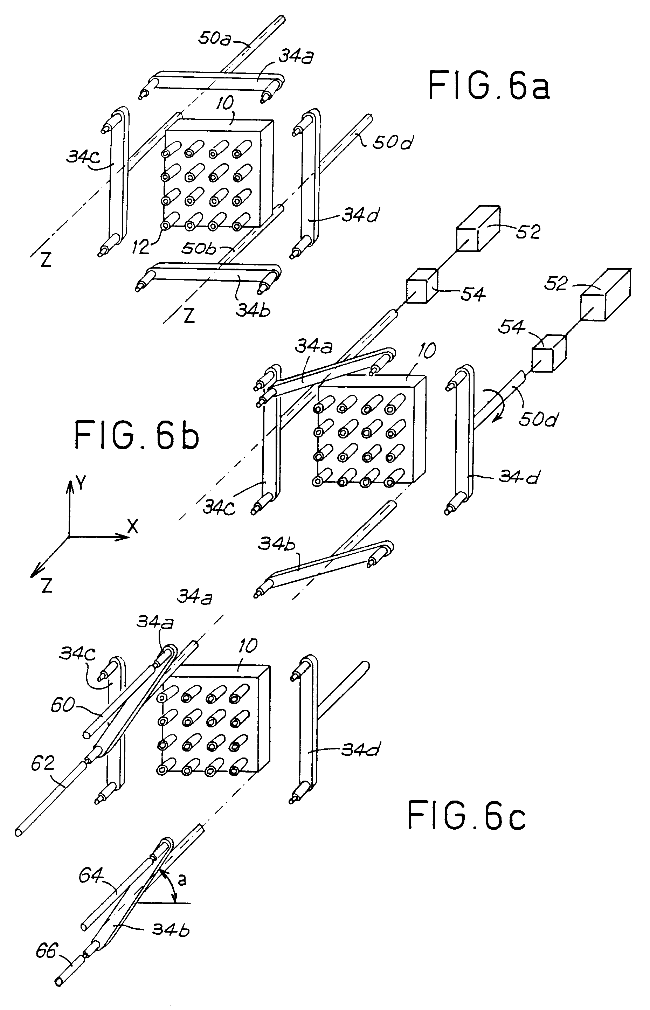

En se référant maintenant aux figures 6a à 6c, on va décrire les moyens de déplacement de la nappe de fibres selon la direction Y et de rapprochement des fibres de celle-ci.

Sur ces figures, on a, afin d'en rendre la compréhension plus aisée, représenté uniquement les fourches 34a à 34d sans les peignes ni les nappes de fibres portées par les peignes. Dans leur position initiale, les fourches 34a et 34b portant la nappe de fibres selon la direction Y sont disposées à proximité immédiate de la plaque 10. Les fourches 34a et 34b sont déplacées selon la direction Z de telle manière que la nappe de fibres reste parallèle aux directions X et Y. Comme le montrent les figures 6b et 6c, les fourches 34a et 34b sont simultanément déplacées selon la direction Z et entraînées en rotation autour de leur axe de supportage 50a et 50b, les axes eux-mêmes restant parallèles à la direction Z. La figure 6b représente les fourches dans une position intermédiaire à la suite du début de leur rotation et la figure 6c les représente dans leur position finale, c'est-à-dire après un déplacement de longueur L à proximité de la plaque 20 s'il s'agit de la première nappe ou à proximité de la nappe précédente resserrée dans les autres cas. On appelle a l'angle total de rotation, des fourches 34a et 34b.

On comprend que l'angle a définit le rapprochement entre les fibres de la nappe et donc le rapport entre les pas p et p', plus précisément, on a p= p' cos a . Il va de soi que les fourches 34c et 34d sont également associées à des axes de rotation 50c et 50d. Le déplacement de chaque fourche peut être réalisé à l'aide d'un moteur 52 associé à un système de mise en rotation des axes 50, système qui est référencé 54, pour provoquer une rotation régulière des fourches 34 en synchronisme avec leur déplacement selon la direction Z. Comme on le voit mieux sur la figure 6c, lorsque les fourches, par exemple 34a et 34b, arrivent dans leur position finale leurs ergots, par exemple 36a et 36b, se trouvent dans le prolongement de tiges fixes 60 et 62 pour la fourche 34a, 64 et 66 pour la fourche 34b. On trouverait également deux paires de tiges correspondant aux fourches 34c et 34d. Comme on l'expliquera plus en détails ultérieurement, les peignes 40 portés par les fourches 34 sont déplacés par glissement hors des ergots 36, 38 lorsque les fourches arrivent en fin de course pour passer sur les tiges de maintien correspondantes. Ainsi les peignes, portés par la fourche 34a, sont empilés successivement sur les tiges 60 et 62 qui constituent ainsi l'équivalent de rails coopérant avec les parties terminales incurvées 42 et 44 des peignes.

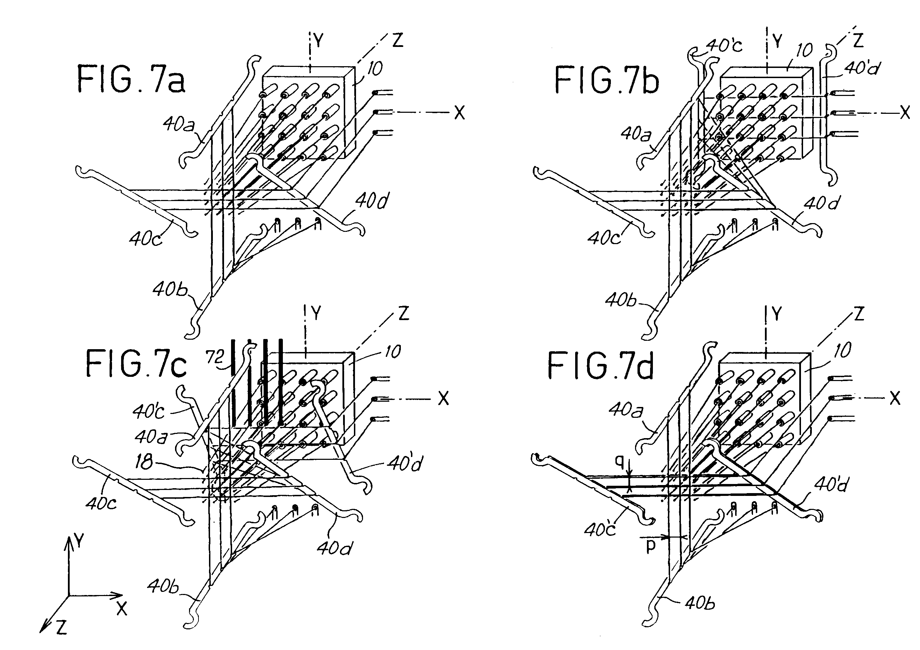

Les figures 7a à 7d illustrent le resserrement des fibres des nappes sous l'effet du déplacement avec rotation des fourches et donc des peignes portant ces fibres. Sur la figure 7a on a représenté les peignes 40a et 40b correspondant à une nappe selon la direction Y ainsi que les peignes 40c et 40d correspondant à une nappe de fibres selon la direction X, ces peignes étant arrivés dans leur position finale c'est-à-dire ayant réalisés le resserrement souhaité selon les directions X et Y. En fait, les peignes sont supportés par les tiges 60 à 66 qui n'ont pas été représentées sur la figure afin de simplifier celle-ci. Sur la figure 7b on a représenté une deuxième paire de peignes 40'c et 40'd dans leur position de départ c'est-à-dire à proximité de la plaque à canons 10, peignes sur lesquels est réalisée une nouvelle nappe de fibres 31 selon la direction X. Sur la figure 7c, on a représenté les peignes 40'c et 40'd dans une position intermédiaire c'est-à-dire que les peignes ont commencé leur rotation provoquant le début du rapprochement des fibres 31 de la nappe. Sur la figure 7d on a représenté les peignes 40'd et 40'c dans leur position finale c'est-à-dire à la fin de leur rotation. Dans cette position, l'écartement entre les fibres 31 de la nappe est égal à q c'est-à-dire la distance souhaitée dans le matériau composite.

Il faut observer de plus que sur la figure 7c on a représenté de façon schématique un dispositif d'imprégnation 72 qui est disposé dans une position intermédiaire entre les deux positions extrêmes des peignes pour réaliser l'imprégnation à l'aide de la résine convenable de la nappe de fibres en déplacement et donc également, des fibres du faisceau disposé selon la direction Z.

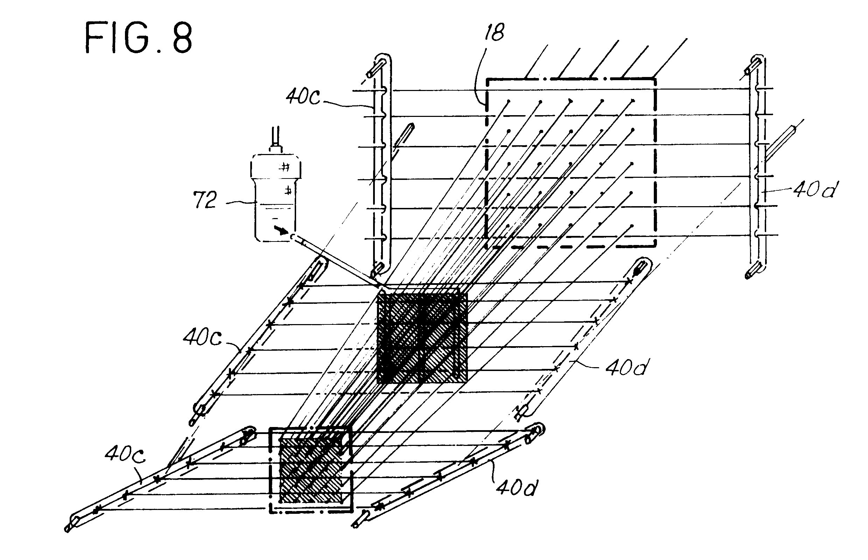

La figure 8 représente en perspective les différentes positions de peignes et broches 34c, 40c et 34b, 40b portant une nappe de fibres parallèle à la direction X. Ces broches ont été représentées dans leur position initiale, dans une position intermédiaire et dans leur position finale. Dans la position intermédiaire, on a représenté en outre la machine d'imprégnation qui permet l'imprégnation des fibres de la nappe et des fibres du faisceau selon la direction Z. Ce dispositif étant en soi de type connu, il n'y a pas lieu de la décrire plus en détail. Pour améliorer l'imprégnation, on peut prévoir que le dispositif d'imprégnation se déplace selon les directions X et Y sur une distance réduite en synchronisme avec le déplacement de la nappe.

On peut simplement observer que la polymérisation de la résine formant la matrice du matériau se produit lorsque les nappes alternativement selon la direction X et selon la direction Y arrivent dans leur position terminale sur les tiges.

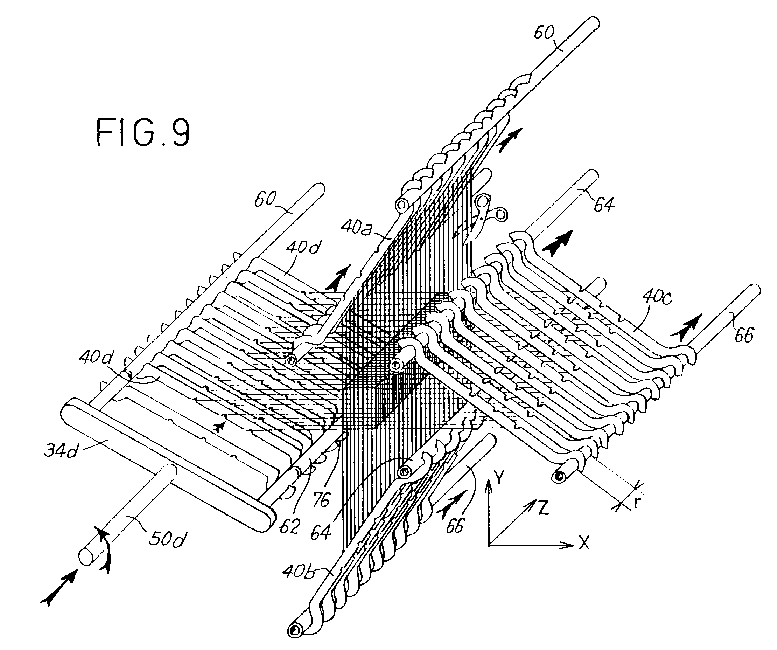

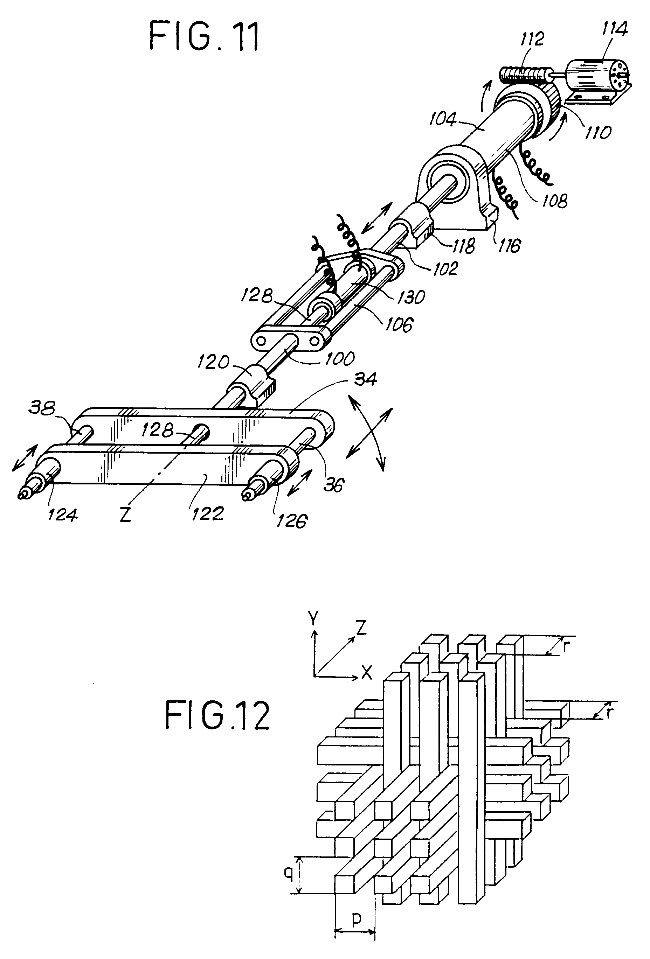

La figure 9 montre en perspective l'ensemble des paires de peignes 40a, 40b et 40c, 40d qui sont mis en place sur les tiges 60, 62, 64 et 66 pour les peignes 40a et 40b et les tiges parallèles 60', 62' et 64', 66' pour les peignes 40c et 40d. Pour rendre cette figure plus lisible la direction de l'axe Z a été inversée par rapport à celle utilisée pour les autres figures. On a représenté également sur cette figure, le matériau composite 76 en forme de barreau qui est en train d'être constitué par, d'une part, les fibres du faisceau selon la direction Z et les fibres des nappes successives selon les directions X et Y, l'ensemble de ces fibres étant noyée dans la résine formant la matrice du matériau composite. La machine comprend également un mécanisme mobile qui permet de provoquer, par glissement, le passage simultané d'une paire de peignes, par exemple 40d et 40c, des ergots des fourches qui les supportent, par exemple 34d et 34c, sur les tiges correspondantes, par exemple 60' 62' et 64', 66', et de faire glisser ces peignes sur les couples de tiges jusqu'à la position convenable. Ces mécanismes seront décrits ultérieurement en liaison avec la figure 11. On a indiqué également sur cette figure que la distance entre les peignes reposant sur un même couple de tiges, par exemple les tiges 64' et 66' pour les peignes 40c, est parfaitement définie. Cette distance est égale à r. Ce résultat est obtenu soit directement grâce à l'épaisseur selon la direction Z des peignes eux-mêmes soit en prévoyant un système de cales convenable. On comprend qu'ainsi, dans un plan prependiculaire à l'axe Z, la distance entre les fibres parallèles à la direction X est égale à q, la distance entre les fibres parallèles à la direction Y est égale à p et la distance selon la direction Z entre les fibres parallèles à la direction Y et les fibres parallèles à la direction X est égale à r. C'est ce que l'on a représenté sous une forme agrandie sur la figure 10.

En se référant maintenant à la figure 11, on va décrire en détail un mode péféré de réalisation des fourches et de leurs moyens de déplacement. La fourche 34 avec ses ergots 36 et 38 pour recevoir les extrémités des peignes est montée à l'extrémité d'une tige 100 qui est elle-même reliée à la tige 102 d'un vérin 104 par l'intermédiaire d'un étrier 106. Le corps 108 du vérin 104 comporte un pignon 110 coopérant avec une vis sans fin 112 montée à l'extrémité de l'arbre du moteur 114. Le corps du vérin 108 est immobilisé en translation mais monté rotatif dans un palier 116. De plus, les tiges 100 et 102 sont libres en translation et en rotation dans des paliers 118 et 120. Ainsi, en commandant simultanéement le moteur 114 et le vérin 104, on obtient le déplacement de la fourche 34 en translation selon la direction Z et en rotation pour provoquer le rapprochement des fibres d'une nappe.

La fourche 34 est munie d'un mécanisme pour permettre le transfert d'un peigne (non représenté) porté par les ergots 36 et 38 sur les tiges correspondantes à la fin de la course de la fourche. Une barre 122, munie de deux manchons 124 et 126 qui peuvent coulisser sur les ergots 36 et 38, est montée à l'extrémité d'une tringle 128. La tringle 128 est montée à coulissement dans la tige 100 qui est creuse. La tringle 128 forme la tige d'un vérin 130 qui est monté dans l'étrier 106. Ainsi lorsqu'on commande le vérin 130, le déplacement des manchons 124, 126 provoque le transfert du peigne depuis les ergots 36, 38 vers les tiges fixes 60 à 66 et 60' à 66'.

Lorsqu'un nouveau peigne est mis en place sur les tiges, on repousse en même temps d'un pas r/2 les peignes qui y avaient été préalablement placés. Ce déplacement est global puisque le produit d'imprégnation qui a déjà été déposé sur les nappes est en cours de polymérisation comme le montre mieux la figure 9, la pièce de matériau composite étant en train de durcir. On comprend également que, grâce à ces reculs successifs, on peut réaliser une pièce 76 de matériau composite en continu. En effet, on n'est pas limité par la longueur des tiges supportant les peignes puisqu'au fur et à mesure du durcissement du matériau d'imprégnation, les peignes correspondants peuvent être enlevés des tiges, la position des fibres des nappes étant figée.

De plus, en raison des reculs successifs, le tronc de pyramide formé par le faisceau 18 de fibres reste globalement inchangé, les reculs successifs du pas r/2 étant compensés par un dévidement correspondant des fibres portées par les bobines 14.

Dans un mode de réalisation préféré de la machine, la plaque à canons est carrée, les canons 12 ont une longueur de 20 mm selon la direction Z, un diamètre intérieur de 1,5 mm et un diamètre extérieur de 2,5 mm. Les pas p' et q', qui sont égaux, ontune valeur de 5 mm ce qui laisse entre deux canons adjacents une distance de 3 mm suffisante pour permettre le passage des aiguilles 28 entre les lignes et les colonnes de canons tout en assurant le guidage de celles-ci sur tout leur trajet à l'intérieur du faisceau. La plaque 10 compte 400 canons 12 réalisés en acier inoxydable. En outre, l'angle de rotation a des fourche est choisi entre 60° et 72° ce qui autorise un rapport entre p' et p ou q' et q compris entre 2 et 3,3. Dans certains cas, il peut être intéressant de choisir des rapports différents pour les directions X et Y.

On va décrire maintenant trois exemples de mise en oeuvre du procédé selon l'invention à l'aide de la machine qui vient d'être décrite.

<u>1er exemple</u>

Réalisation d'un cube en epoxy-aramide
Matériau utilisés :

- Mèche ou fibre de Kevlar de DU PONT à 0,789 g/m pour l'axe Z

- Mèche ou fibre de Kevlar de DU PONT à 0,310 g/m pour X et Y
- Résine LY-556 avec 10 parties pour 100 de durcisseur HY-951 de CIBA (polymérisation à froid).

Pour faciliter l'imprégnation et augmenter la qualité de l'interface fibres-matrices, les mèches ou fibres ont subi un traitement décrit dans le brevet français n° 84 14 800 du 26/09/1984 pour : Procédé de préparation de matériaux composites par plasma électrostatique et produits obtenus.

Le faisceau de fibres n'utilise que 196 (14 x 14) des 400 canons de la plaque 10 et les peignes ont une épaisseur de 1 mm. Après polymérisation à température ambiante, découpe grossière pour dégager le 3 D de la machine et postcuisson en étuve pour achever la polymérisation, le tube a été découpé à la fraiseuse et les faces polies pour examen microscopique. Le cube a pour dimensions 25 x 24 x 22 mm pour un poids de 17,83 g. Il contient respectivement selon les 3 axes 3,90, 4,00 et 4,06 m de Kevlar soit 3,08 g en Z, 2,52 g en X et 2,56 g en Y, les mèches en X et Y étant en double. La répartion du renfort est de 38 % en Z, 31 % en X et 31 % en Y. Le taux de renforcement massique est de 45 %. A partir des densités de la résine et du renfort, on calcule le taux volumique qui est égal à 41 % avec une porosité inférieure à 3 %.

2ème exemple :

Il s'agit de la réalisation d'un barreau verre-epoxy chargé.
Matériaux utilisés :

- Mèche de verre E de Vetrotex réf. P 185 de 2 400 Tex (2,4 g/m)
- Même mèche mais de 1 200 Tex (1,2 g/m)

Cette mèche de verre simple (2 400 Tex) ou prise en double pour les axes X et Y est relativement grosse : section de 0,945 mm2. Le calcul théorique pour obtenir un taux volumique global de renfort de 50 % conduit à un pas de 2,5 mm en utilisant les peignes de 1,5 mm espacés par des cales de 1 mm. L'angle de rotation a été choisi égal à 62 % ce qui donne un pas en X et Y de 2,35 mm.
Les mèches ont également été traitées par plasma électrostatique selon le brevet n° 84 14 800 comme pour le premier exemple.
Les 400 canons ont été utilisés et 400 peignes ont été mis en place.

- La résine est la même que celle de l'exemple 1 à laquelle on a rajouté 3 % de gel de silice pour éviter son écoulement du bloc composite avant durcissement mais sans nuire à la qualité de l'imprégnation.

Après durcissement, découpe grossière, cuisson en étuve pour achever la polymérisation et découpe à la fraiseuse en choisissant les plans de découpe entre les couches, on a obtenu un bloc de 212 x 45 x 45 mm pesant 787,3 g.

En X et en Y, on a 19 mèches et en Z 84 couches (85 sur la surface adjacente).
La répartition s'établit comme suit :

- en nombre de mèches :
  axe Z : 19 x 19 - axe X : 84 x 19 - axe Y : 84 x 19
- pour une longueur d'arrête de :
  axe Z : 212 mm - axe X : 45 mm - axe Y : 45 mm
- soit en longueur de verre :
  axe Z : 76,53 m - axe X : 71,82 m - axe Y : 71,82 m

Ce qui donne une longueur totale de verre de 220,17 m aboutissant à une répartition :
axe Z : 34,8 % - axe X : 32,6 % - axe Y : 32,6 %
En fait, pour X et Y, il s'agit de mèche double (1 200 Tex X 2 = 2 400 Tex) mais l'affleurement sur la face se présente comme une mèche unique. Cette longueur de verre correspond à une masse de 527 g et à un volume de 207 cm3 en prenant 2,54 g/cm3 comme masse volumique pour le verre. Le taux massique de verre du composite est 66,9 %, le taux volumique 48,3 %.

3ème exemple :

Il s'agit de la réalisation d'un barreau hybride aramide carbone sur résine époxyde où le taux volumique de fibres est élevé (resserrement maximal).
Produits utilisés :

- Même formulation de résine que pour le deuxième exemple
- Mèche d'aramide Kevlar 49 de DU PONT de 0,31 g/m (2 800 deniers)
- Mèche de carbone AS4 de 12 000 filaments de Hercules pesant 0,90 g/m

On a utilisé 800 peignes de 1 mm d'épaisseur sans cale.
L'entassement des peignes est limité par l'épaisseur des fibres de Kevlar. Ces peignes, qui n'ont que 15 encoches, imposent le nombre de canons utilisables ainsi 196 canons ont été garnis de carbone (Z).
En suivant une préparation identique à celle des 2 premiers exemples, on obtient un barreau (dressage des faces à la fraise) de 200 x 20x 20 mm.
A partir du nombre d'affleurements de mèches, on a calculé les pas :

- en Z : 1,25 mm (60 mèches), en X : 1,5 mm (13 mèches),
- en Y : 1,5 mm (13 mèches).
  On en déduit les masses de fibres :
- en Z : 13 x 13 x 0,2 m x 0,90 g/m = 30,4 g (carbone)
- en X : 13 x 160 x 0,02 m x 0,31 g/m x 2 = 25,8 g (Kevlar)

-   en Y : identique à X = 25,8 g (Kevlar)

A partir de ces masses et de la masse volumique respective des renforts, on calcule les volumes de fibres :

-   en Z : 17,1 cm3 - en X : 17,3 cm3 - en Y : 17,3 cm3

soit un volume totale de renfort de 51,7 cm3.

Le volume du barreau étant de 20 x 2 x 2 = 80 cm3, le taux volumique de renfort est de 64,5 %. On a pratiquement une équipartition en volume des renforts selon les 3 axes.

Dans la description précédente, on a décrit plus particulièrement en détail le cas d'une structure tridimensionnelle avec des fibres selon les directions X, Y et Z, Z étant orthogonale aux directions X et Y et les directions X et Y étant elles-mêmes orthogonales entre elles. Il va de soi que les directions X et Y pourraient ne pas être orthogonales. Il va également de soi qu'on ne sortirait pas de l'invention si dans les plans perpendiculaires à la direction Z, on prévoyait trois directions distinctes de nappes ou plus au lieu des seules directions X, Y. On obtiendrait ainsi, par exemple, un motif hexagonal, dans ces plans, au lieu d'un motif carré ou rectangulaire. Il faudrait alors prévoir trois paires de peignes, trois paires de fourches et six paires de tiges de supportage.

Dans la description précédente, on a en général employé par simplification le terme "fibre". Il va de soi que chaque fibre est constituée par une pluralité de filaments en forme de mèches ou éventuellement de cordelettes.

**Revendications**

1.  Procédé de fabrication d'un matériau composite à structure tridimensionnelle de fibres continues de renforcement, lesdites fibres étant orientées respectivement selon les directions X, Y, Z, la direction Z étant perpendiculaire aux directions X, Y, ledit matériau présentant des pas p, q et r selon les directions X, Y et Z respectivement, ledit procédé comportant les étapes de tendre un faisceau de fibres présentant un axe selon la direction Z, de placer entre les fibres dudit faisceau, en alternance, des nappes de fibres disposées selon la direction X et parallèlement à la direction au plan XY, et des nappes de fibres disposées selon la direction Y et parallèlement au plan XY, puis d'imprégner les nappes et le faisceau de fibres à l'aide d'un liquide thermodurcissable, ledit procédé se caractérisant en ce que :

    a) on tend le faisceau de fibres présentant un axe selon la direction Z de telle manière que les fibres, dans un premier plan parallèle aux directions X et Y, présentent entre elles des pas p' et q' selon respectivement les directions X et Y, et dans un deuxième plan parallèle aux directions X et Y et à une distance L dudit premier plan, des pas p et q respectivement selon les directions X et Y correspondant à la structure de renforcement souhaitée avec p<p' et q<q', les fibres formant des couloirs entre elles selon les directions X et Y se rétrécissant du premier au deuxième plan;

    b) on met en place entre les fibres du faisceau à proximité dudit premier plan une première nappe, sensiblement plane, de fibres disposées selon la direction X et parallèlement au plan XY, les fibres de ladite nappe étant espacées d'une longueur sensiblement égale à q' et on déplace sur une distance L l'ensemble de ladite nappe parallèlement à la direction Z vers ledit deuxième plan en provoquant simultanément un rapprochement progressif des fibres de ladite nappe de telle manière que, à la fin dudit déplacement, l'écartement des fibres de ladite nappe soit sensiblement égal à q, et on maintient ledit écartement;

    c) on met en place, entre les fibres du faisceau à proximité dudit premier plan, une deuxième nappe, sensiblement plane, de fibres disposées selon la direction Y et parallèlement au plan XY, les fibres de ladite nappe étant espacées d'une longueur sensiblement égale à p', et on déplace sur une distance L l'ensemble de ladite deuxième nappe parallèlement à la direction Z vers ledit deuxième plan en provoquant simultanément un rapprochement progressif des fibres de la deuxième nappe de telle manière qu'à la fin dudit déplacement l'écartement des fibres de la deuxième nappe soit sensiblement égal à p, on maintient ledit écartement et on déplace sur une distance r/2 selon Z la première nappe lorsque la deuxième atteint le deuxième plan; et

    d) on répète alternativement les opérations b et c pour les première et deuxième nappes de fibres jusqu'à ce qu'on obtienne une longueur voulue selon la direction Z, le déplacement sur la distance L vers ladite deuxième extrémité d'une première ou d'une deuxième nappe de fibres étant accompagné d'un déplacement de r/2 selon la direction Z de toutes les nappes qui la précèdent.

2.  Procédé selon la revendication 1, caractérisé en ce que l'étape d'imprégnation consiste à effectuer une opération d'imprégnation de chaque première ou deuxième nappe de fibres durant leur déplacement.

3.  Procédé selon l'une quelconque des revendications 1 et 2, caractérisé en ce que les directions X et Y sont sensiblement orthogonales entre elles.

4.  Procédé selon l'une quelconque des revendications 1 à 3, caractérisé en ce que les pas p et q ainsi que p' et q' sont respectivement égaux.

5.  Machine pour la fabrication d'un matériau composite à structure tridimensionnelle de fibres de renforcement, lesdites fibres étant orientées respectivement selon les directions X, Y, Z, les directions X et Y étant orthogonales à la direction Z et présentant des pas p, q et r selon les directions X, Y et Z respectivement, ladite machine comprenant des premiers moyens de maintien (10, 12) et des deuxièmes moyens de maintien (20) disposés à une distance L des premiers moyens pour maintenir un faisceau de fibres présentant un axe selon la direction Z et des moyens pour réaliser une imprégnation desdites fibres à l'aide d'un matériau thermodurcissable, ladite machine se caractérisant en ce que les premiers moyens de maintien définissent pour les fibres du faisceau des pas respectivement égaux à p' et q' selon les directions X et Y et les deuxièmes moyens de maintien définissent pour les fibres du faisceau des pas p et q selon les directions X et Y avec p'>p et q'>q et en ce qu'elle comprend en outre:

> une pluralité de premiers moyens support (40c, 40d) pour mettre en place, à proximité desdits premiers moyens de maintien, des premières nappes de fibres disposées selon la direction X dans un plan parallèle à X et Y, les fibres étant espacées d'une distance sensiblement égale à q';
> une pluralité de deuxièmes moyens support (40a, 40b) pour mettre en place à proximité desdits premiers moyens de maintien, des deuxièmes nappes de fibres disposées selon la direction Y dans un plan parallèle à X et Y, les fibres étant espacées d'une distance sensiblement égale à p';
> des premiers moyens (34c, 34d) pour déplacer sur une distance L selon la direction Z lesdits premiers moyens de support (40c, 40d) à partir desdits premiers moyens de maintien (10, 12) et pour simultanément provoquer le rapprochement des fibres desdites premières nappes de telle manière qu'à la fin du déplacement, la distance entre les fibres selon la direction Y soit sensiblement égale à q, et des moyens (60', 62') pour maintenir la distance entre les fibres desdites premières nappes égale à q;
> des deuxièmes moyens (34a, 34b) pour déplacer sur une distance L selon la direction Z lesdits deuxièmes moyens support (40a, 40b) à partir desdits premiers moyens de maintien (10, 12) et pour simultanément provoquer le rapprochement des fibres desdites deuxièmes nappes de telle manière qu'à la fin du déplacement la distance des fibres selon la direction X soit sensiblement égale à p, et des moyens (60, 62) pour maintenir la distance entre les fibres desdites deuxièmes nappes égale à p; et
> des moyens de commande (50, 52, 54) pour actionner alternativement lesdits premiers et deuxièmes moyens de déplacement (34a, 34b, 34c, 34d) et des moyens (122 à 130) pour déplacer selon la direction Z d'une distance r/2 les moyens supports (40a à 40d) des nappes déjà resserrées lorsque les premiers ou deuxièmes moyens de déplacement (34a à 34d) amènent une première ou une deuxième nappe dans le deuxième plan.

6.  Machine selon la revendication 5, caractérisée en ce les moyens d'imprégnation (72) sont disposés entre lesdits premier et deuxième moyens de maintien (10, 20) pour réaliser successivement l'imprégnation de chaque nappe lors de son déplacement.

7.  Machine selon l'une quelconque des revendications 5 et 6, caractérisée en ce que lesdits premiers moyens de maintien comprennent une plaque (10) parallèle aux plans X, Y et munie d'une pluralité de canons (12) cylindriques ayant leurs axes selon la direction Z, une fibre du faisceau passant dans chaque canon, lesdits canons étant disposés pour présenter entre eux les pas p' et q'.

8.  Machine selon la revendication 7, caractérisée en ce qu'elle comprend en outre deux ensembles d'aiguilles (24, 28) respectivement mobiles, selon les directions X et Y, pour former successivement lesdites premières et deuxièmes nappes de fibres, lesdites aiguilles étant aptes à passer entre lesdits canons (12) de ladite plaque (10), lesdits canons étant rangés selon les directions X et Y.

9.  Machine selon l'une quelconque des revendications 5 à 8, caractérisée en ce que chaque moyen support comprend deux ensembles formant peignes (40a, 40b, 40c, 40d) munis d'encoches (46) pour le passage des fibres (31) formant une nappe.

10. Machine selon la revendication 9, caractérisée en ce que chaque moyen de déplacement comprend une paire d'ensembles formant fourches (34a, 34b, 34c, 34d) aptes à recevoir chacun, de façon amovible, un desdits ensembles formant peignes (40a à 40d) et des moyens (50, 52, 54) pour déplacer en synchronisme lesdites fourches parallèlement à la direction Z et pour provoquer simultanément la rotation progressive de chaque fourche autour d'un axe de direction Z en maintenant parallèles les fourches d'une même paire.

**11.** Machine selon la revendication 10, caractérisée en ce qu'elle comprend en outre des moyens d'immobilisation (60 à 66) disposés parallèlement à la direction Z et autour dudit faisceau de fibres et à proximité desdits deuxièmes moyens de maintien (20) pour supporter lesdits peignes (40a à 40d) lorsque ceux-ci ont terminé leur déplacement et leur rotation sous l'effet desdits moyens de déplacement (34a à 34d et 50, 52, 54), et pour les maintenir dans cette position jusqu'au durcissement au moins partiel dudit liquide d'imprégnation.

**12.** Machine selon la revendication 11, caractérisée en ce que lesdits moyens d'immobilisation comprennent quatre paires de tiges (60 à 66 et 60' à 66') disposées parallèlement à la direction Z, chaque paire de tiges étant apte à recevoir les extrémités (42, 44) d'un peigne (40a à 40d) dans son orientation finale définie par lesdits moyens de déplacement.

**13.** Machine selon la revendication 12, caractérisée en ce qu'elle comprend en outre des moyens pour définir la distance r entre les peignes (40a à 40'a) successifs supportés par une même paire de tiges (60, 62).

**14.** Machine selon l'une quelconque des revendications 12 et 13, caractérisée en ce que l'arrivée des peignes associés à une nouvelle nappe repousse d'une distance r/2 l'ensemble des nappes dont les peignes (40a à 40d) ont déjà été mis en place sur lesdites paires de tiges (60 à 66 et 60' à 66').

## Claims

**1.** A method of fabricating a composite material having a three-dimensional structure of continuous reinforcing fibers, said fibers extending respectively along directions X, Y and Z, where the direction Z is perpendicular to the directions X and Y, said material presenting pitches p, q and r respectively along directions X, Y and Z, said method comprising the steps of extending a bundle of fibers presenting an axis along direction Z, of placing between the fibers of said bundle, alternately, sheets of fibers occupying the direction X and parallel to the XY direction or plane and sheets of fibers occupying the direction Y and parallel to the XY plane, then of impregnating the sheets and the bundle of fibers by means of a thermosettable liquid, said method being characterised in that :

a) the bundle of fibers is extended along the Z direction in such a manner that in a first plane parallel to the directions X and Y the fibers present pitches p' and q' respectively in the X direction and the Y direction and in a second plane also parallel to the X and Y directions and at a distance L from said first plane, they present pitches p and q respectively in the X direction and the Y direction that correspond to the desired reinforcing structure with p<p' and q<q', the fibers leaving passages between one and another in the X and Y directions, which passages taper from the first plane towards the second plane;

b) a substantially plane first sheet of fibers extending in the X direction parallel to the XY plane is put into place between the fibers of the bundle in the proximity of said first plane, the fibers of said sheet being spaced apart by a distance substantially equal to q', and all of said sheet is displaced over a distance L parallel to the Z direction towards said second plane while simultaneously progressively moving the fibers of said sheet towards one another in such a manner that at the end of said movement the spacing between the fibers of said sheet is substantially equal to q, and said spacing is held ;

c) a substantially plane second sheet of fibers extending in the Y direction parallel to the XY plane is put into place between the fibers of the bundle in the proximity of said first plane, the fibers of said sheet being spaced apart by a distance substantially equal to p', and all of said sheet is displaced over a distance L parallel to the Z direction towards said second plane while simultaneously progressively moving the fibers of the second sheet towards one another in such a manner that at the end of said movement the spacing between the fibers of the second sheet is substantially equal to p, said spacing is held, and the first sheet is displaced through a distance r/2 in the Z direction when the second sheet reaches the second plane ; and

d) the operations b and c are repeated alternately for the first and second sheets of fibers until a desired length is obtained in the Z direction, with the displacement over the distance L towards said second end of a first or second sheet of fibers being accompanied by displacement through r/2 in the Z direction of all of the sheets that precede it.

**2.** A method according to claim 1, characterised in that the impregnating step consists in performing an impregnating operation on each first or second sheet of fibers while it is being displaced.

**3.** A method according to one of claims 1 and 2, characterised in that the X and Y directions are substantially mutually orthogonal.

**4.** A method according to any one of claims 1 to 3, characterised in that the pitches p and q are equal to each other, as are the pitches p' and q'.

5. A machine for fabricating a composite material having a three-dimensional structure of reinforcing fibers, said fibers extending respectively along directions X, Y and Z where the directions X and Y are orthogonal to the direction Z, and presenting pitches p, q and r respectively along directions X, Y and Z, said machine comprising first keeper means (10, 12) and second keeper means (20) disposed as a distance L from the first keeper means, the keeper means serving to hold a bundle of fibers having an axis in the Z direction and means for impregnating said fibers by means of a thermosettable material,

said machine being characterised in that the first keeper means define respective pitches p' and q' in the X and Y directions for the fibers of the bundle and the second keeper means define pitches p and q in the directions X and Y for the fibers of the bundle, where p'>p and q'>q and in that it further comprises :

a plurality of first support means (40c, 40d) for putting first sheets of fibers into place in the proximity of said first keeper means, the fibers being disposed in the X direction, extending in a plane parallel to X and Y, the fibers being spaced apart by a distance substantially equal to q' ;

a plurality of second support means (40a, 40b) for installing second sheets of fibers in the proximity of said first keeper means, the fibers being disposed in the Y direction in a plane parallel to X and Y, the fibers being spaced apart by a distance substantially equal to p' ;

first displacement means (34c, 34d) for displacing said first support means (40c, 40d) over a distance L in the Z direction from said first keeper means (10, 12) and for simultaneously causing the fibers of said first sheets to move towards one another in such a manner that at the end of their displacement, the distance between the fibers in the Y direction is substantially equal to q, and holder means (60', 62') for holding the distance between the fibers of said first sheets equal to q;

second displacement means (34a, 34b) for displacing said second support means (40a, 40b) over a distance L in the Z direction from said first keeper means (10, 12) and for simultaneously causing the fibers of said second sheets to move towards one another in such a manner that at the end of their displacement, the distance between the fibers in the X direction is substantially equal to p, and holder means (60, 62) for holding the distance between the fibers of said second sheet equal to p; and

control means (50, 52, 54) for alternately actuating said first and second displacement means (34a, 34b, 34c, 34d) and means (122 to 130) for displacing the already close-together sheet support means (40a to 40d) along the Z direction through a distance r/2 whenever the first or second displacement means (34a to 34d) bring a first or a second sheet into the second plane.

6. A machine according to claim 5, characterised in that the impregnation means (72) are disposed between said first and second keeper means (10, 20) for successively impregnating each sheet during displacement thereof.

7. A machine according to one of claims 5 and 6, characterised in that said first keeper means comprise a plate (10) parallel to the plane X, Y and provided with a plurality of cylindrical tubes (12) having their axes extending along the Z direction, a bundle fiber passing through each tube, said tubes mutually disposed at the pitches p' and q'.

8. A machine according to claim 7, characterised in that it further includes two sets of needles (24, 28) suitable for moving in the X direction and in the Y direction, respectively, to form said first and second sheets of fibers, successively, said needles being suitable for passing between said tubes (12) of said plate (10), said tubes being located in said X and Y directions.

9. A machine according to any one of claims 5 to 8, characterised in that each support means comprises two comb-forming assemblies (40a, 40b, 40c, 40d) provided with notches (46) for receiving the fibers (31) forming a sheet.

10. A machine according to claim 9, characterised in that each displacement means comprises a pair of fork-forming assemblies (34a, 34b, 34c, 34d) each suitable for removably receiving one of said comb-forming assemblies (40a to 40d), and means (50, 52, 54) for synchronizing displacing said forks parallel to the Z direction while simultaneously causing each fork to rotate progressively about a Z direction axis while keeping the forks in any pair parallel to each other.

11. A machine according to claim 10, characterised in that it further includes holding means (60 to 66) disposed parallel to the Z direction and around said bundle of fibers in the proximity of said second keeper means (20) for supporting said combs (40a to 40d) when they have completed their displacement and their rotation under the drive of said displacement means (34a to 34d and 50, 52, 54), and for holding them in said position until the impregnation liquid has hardened, at least in part.

12. A machine according to claim 11, characterised in that said holding means comprise four pairs of rods (60 to 66 and 60' to 66') disposed parallel to the Z direction, each pair of rods being suitable for receiving the ends (42, 44) of a comb in its final orientation as defined by said displacement means.

13. A machine according to claim 12, characterised in that it further includes means for defining the distance r between successive combs (40a to 40'a) supported by the same pair of rods (60, 62).

14. A machine according one of claims 12 and 13, characterised in that the arrival of the combs associated with a new sheet cause the set of sheets whose combs (40a to 40d) have already been installed on said pairs of rods (60 to 66 and 60' to 66') to be pushed back through a distance r/2.

**Patentansprüche**

1. Verfahren zum Herstellen eines mit Verstärkungs-Endlosfasern dreidimensional strukturierten Verbundwerkstoffes, in dem die genannten Fasern in der Richtung X, Y bzw. Z ausgerichtet sind, wobei die Richtung Z zu den Richtungen X, Y rechtwinklig ist und der genannte Werkstoff in den Richtungen X, Y und Z die Teilung p, q bzw. r aufweist, wobei das genannte Verfahren die Arbeitsschritte Spannen eines Faserbündels mit einer Achse in der Richtung Z, wechselweises Einbringen zwischen die Fasern des genannten Bündels von Faserschichten, die in der Richtung X und parallel zur Ebene XY ausgerichtet sind, und von Faserschichten, die in der Richtung Y und parallel zur Ebene XY ausgerichtet sind, danach Imprägnieren der Schichten und des Faserbündels mit einer hitzehärtbaren Flüssigkeit,
wobei das genannte Verfahren dadurch gekennzeichnet ist, daß

a) das Faserbündel mit einer Achse in der Richtung Z so gespannt wird, daß die Fasern in einer ersten, zu den Richtungen X und Y parallelen Ebene unter sich die Teilungen p' und q' in der Richtung X bzw. Y und in einer zweiten, zu den Richtungen X und Y parallelen und von der ersten Ebene im Abstand L angeordneten Ebene die Teilungen p und q in der Richtung X bzw. Y aufweisen, die der angestrebten Verstärkungsstruktur mit p<p' und q<q' entsprechen, wobei die Fasern zwischen sich Gänge in den Richtungen X und Y bilden, die sich von der ersten zur zweiten Ebene hin verengen,

b) zwischen die Fasern des Bündels in der Nähe der genannten erste Ebene eine im wesentlichen ebene Schicht aus in der Richtung X und parallel zur Ebene XY ausgerichteten Fasern eingebracht wird, wobei die Fasern der genannten Schicht um einen q' im wesentlichen gleichen Betrag beabstandet sind, und die genannte Schicht als Ganzes parallel zur Richtung Z um eine Strecke L zur genannten zweiten Ebene hin fortbewegt wird, wobei gleichzeitig ein allmähliches Zusammendrängen der Fasern der genannten Schicht hervorgerufen wird, derart, daß bei Beendigung der genannten Fortbewegung der Abstand der Fasern der genannten Schicht q im wesentlichen gleich ist, und der genannte Abstand aufrechterhalten wird,

c) zwischen die Fasern des Bündels in der Nähe der genannten ersten Ebene eine im wesentlichen ebene zweite Schicht aus in der Richtung Y und parallel zur Ebene XY ausgerichteten Fasern eingebracht wird, wobei die Fasern der genannten Schicht um einen p' im wesentlichen gleichen Betrag beabstandet sind, und die genannte zweite Schicht als Ganzes parallel zur Richtung Z um eine Strecke L zur genannten zweiten Ebene hin fortbewegt wird, wobei gleichzeitig ein allmähliches Zusammendrängen der Fasern der zweiten Schicht hervorgerufen wird, derart, daß bei Beendigung der genannten Fortbewegung der Abstand der Fasern der zweiten Schicht p im wesentlichen gleich ist, der genannte Abstand aufrechterhalten wird, und die erste Schicht um einen Betrag r/2 in Z fortbewegt wird, wenn die zweite Schicht die zweite Ebene erreicht, und
d) die Operationen b und c für die erste und die zweite Faserschicht alternierend wiederholt wird, bis in der Richtung Z eine angestrebte Länge erreicht ist, wobei mit der Fortbewegung einer ersten oder einer zweiten Faserschicht um den Betrag L zur genannten zweiten Ebene hin eine Fortbewegung um r/2 in der Richtung Z aller ihr vorausgehenden Schichten einhergeht.

2. Verfahren nach Anspruch 1,

dadurch gekennzeichnet, daß der Arbeitsschritt der Imprägnierung von der Ausführung einer Imprägnieroperation jeder ersten oder zweiten Faserschicht während ihrer Fortbewegung gebildet ist.

3. Verfahren nach einem der Ansprüche 1 und 2, dadurch gekennzeichnet, daß die Richtungen X und Y im wesentlichen zueinander rechtwinklig sind.

**4.** Verfahren nach einem der Ansprüche 1 bis 3, dadurch gekennzeichnet, daß die Teilungen p und q sowie p' und q' je gleich sind.

**5.** Vorrichtung zum Herstellen eines mit Verstärkungs-Endlosfasern dreidimensional strukturierten Verbundwerkstoffes, in dem die genannten Fasern in der Richtung X, Y bzw. Z ausgerichtet sind, wobei die Richtungen X und Y zur Richtung Z rechtwinklig sind, und in den Richtungen X, Y und Z die Teilung p, q bzw. r aufweisen, wobei die genannte Vorrichtung erste Halteeinrichtungen (10, 12) und im Abstand L von den ersten Einrichtungen angeordnete zweite Halteeinrichtungen (20) zum Aufrechterhalten eines Faserbündels mit einer Achse in der Richtung Z und Einrichtungen zum Imprägnieren der genannten Fasern mit einem hitzehärtbaren Material aufweist, wobei die genannte Vorrichtung dadurch gekennzeichnet ist, daß die ersten Halteeinrichtungen für die Fasern des Bündels p' und q' gleiche Teilungen in der Richtung X bzw. Y definieren, und die zweiten Halteeinrichtungen für die Fasern des Bündels Teilungen p und q in der Richtung X bzw. Y definieren, wobei p'>p und q'>q sind, und daß sie außerdem umfaßt:

eine Vielzahl erster Stützeinrichtungen (40c, 40d) zum Einbringen in der Nähe der genannten ersten Halteeinrichtungen von ersten Schichten aus in der Richtung X ausgerichteten Fasern in eine zu X und Y parallele Ebene, wobei die Fasern um einen q' im wesentlichen gleichen Betrag beabstandet sind, eine Vielzahl zweiter Stützeinrichtungen (40a, 40b) zum Einbringen in der Nähe der genannten ersten Halteeinrichtungen von zweiten Schichten aus in der Richtung Y ausgerichteten Fasern in eine zu X und Y parallele Ebene, wobei die Fasern um einen p' im wesentlichen gleichen Betrag beabstandet sind, erste Einrichtungen (34c, 34d) zum Fortbewegen der genannten ersten Stützeinrichtungen (40c, 40d) um einen Betrag L in der Richtung Z von den genannten ersten Halteeinrichtungen (10, 12) weg und zum gleichzeitigen Zusammendrängen der Fasern der genannten ersten Schichten in der Weise, daß bei Beendigung der Fortbewegung der Abstand zwischen den Fasern in der Richtung Y q im wesentlichen gleich ist, und Einrichtungen (60', 62') zum Aufrechterhalten des q gleichen Abstandes zwischen den Fasern der genannten ersten Schichten, zweite Einrichtungen (34a, 34b) zum Fortbewegen der genannten zweiten Stützeinrichtungen (40a, 40b) um einen Betrag L in der Richtung Z von den genannten ersten Halteeinrichtungen (10, 12) weg und zum gleichzeitigen Zusammendrängen der Fasern der genannten zweiten Schichten in der Weise, daß bei Beendigung der Fortbewegung der Abstand zwischen den Fasern in der Richtung X p im wesentlichen gleich ist, und Einrichtungen (60, 62) zum Aufrechterhalten des p gleichen Abstandes zwischen den Fasern der genannten zweiten Schichten, und

Betätigungseinrichtungen (50, 52, 54) zum alternierenden Betätigen der genannten ersten und zweiten Fortbewegungseinrichtungen (34a, 34b, 34c, 34d) und der Einrichtungen (122 bis 130) zum Fortbewegen der Stützeinrichtungen (40a bis 40d) der bereits zusammengedrängten Schichten in der Richtung Z um einen Betrag r/2, wenn die ersten oder die zweiten Fortbewegungseinrichtungen (34a bis 34d) eine erste oder eine zweite Schicht in die zweite Ebene verbringen.

**6.** Vorrichtung nach Anspruch 5, dadurch gekennzeichnet, daß die Imprägniereinrichtungen (72) zwischen den genannten ersten und zweiten Halteeinrichtungen (10, 20) angeordnet sind, um nacheinander jede Schicht bei ihrer Fortbewegung zu imprägnieren.

**7.** Vorrichtung nach einem der Ansprüche 5 und 6, dadurch gekennzeichnet, daß die genannten ersten Halteeinrichtungen eine Platte (10) aufweisen, die zur Ebene XY parallel und mit einer Vielzahl zylindrischer Rohre (12) versehen ist, deren Achsen in der Richtung Z ausgerichtet sind, wobei eine Faser des Bündels jedes Rohr durchläuft, die genannten Rohre so angeordnet sind, daß zwischen ihnen die Teilungen p' und q' bestehen.

**8.** Vorrichtung nach Anspruch 7, dadurch gekennzeichnet, daß sie außerdem zwei Nadelsätze (24, 28) aufweist, die je in der Richtung X bzw. Y bewegbar sind, um nacheinander die genannten ersten und zweiten Faserschichten zu bilden, wobei die genannten Nadeln zwischen den genannten Rohren (12) der genannten Platte (10) bewegbar sind und die genannten Rohre in Reihen entsprechend den Richtungen X und Y angeordnet sind.

**9.** Vorrichtung nach einem der Ansprüche 5 bis 8, dadurch gekennzeichnet, daß jede Stützeinrichtung zwei Baugruppen aufweist, die Kämme (40a, 40b, 40c, 40d) bilden, welche mit Kerben (46) für den Durchlauf der eine Schicht bildenden Fasern (31) versehen sind.

**10.** Vorrichtung nach Anspruch 9, dadurch gekennzeichnet, daß jede Fortbewegungseinrichtung ein Paar Baugruppen aufweist, die Gabein (34a, 34b, 34c, 34d) bilden, welche je eine der genannten, Kämme (40a bis 40d) bildenden Baugruppen aufzunehmen vermögen, und Einrichtungen (50, 52, 54) zum synchronen Fortbewegen der genannten Gabeln parallel zur Richtung Z und zum gleichzeitigen Hervorrufen der allmählichen Drehung jeder Gabel um eine in der Richtung Z ausgerichtete Achse bei Parallelhaltung der Gabeln ein und desselben Paares.

11. Vorrichtung nach Anspruch 10, dadurch gekennzeichnet, daß sie außerdem Stillhalteeinrichtungen (60 bis 66) aufweist, die parallel zur Richtung Z und um das genannte Faserbündel und in der Nähe der genannten zweiten Halteeinrichtungen (20) angeordnet sind, um die genannten Kämme (40a bis 40d) zu tragen, wenn diese ihre Fortbewegung und ihre Drehbewegung unter der Wirkung der genannten Fortbewegungseinrichtungen (34a bis 34d und 50, 52, 54) beendet haben, und sie in dieser Position bis zur wenigstens teilweisen Härtung der genannten Imprägnierflüssigkeit zu halten.

12. Vorrichtung nach Anspruch 11, dadurch gekennzeichnet, daß die genannten Stillhalteeinrichtungen vier Paare Stangen (60 bis 66 und 60' bis 66') umfassen, die parallel zur Richtung Z angeordnet sind, wobei jedes Stangenpaar die Endstücke (42, 44) eines Kammes (40a bis 40d) in dessen endgültiger, durch die genannten Fortbewegungseinrichtungen definierten Endausrichtung aufzunehmen vermögen.

13. Vorrichtung nach Anspruch 12, dadurch gekennzeichnet, daß sie außerdem Einrichtungen zum Definieren des Abstandes r zwischen aufeinanderfolgenden Kämmen (40a bis 40'a) umfassen, die von ein und demselben Stangenpaar (60, 62) getragen sind.

14. Vorrichtung nach einem der Ansprüche 12 und 13, dadurch gekennzeichnet, daß der Zulauf der einer neuen Schicht zugeordneten Kämme alle Schichten, deren Kämme (40a bis 40d) bereits auf die genannten Stangenpaare (60 bis 66 und 60' bis 66') verbracht worden sind, um einen Betrag r/2 zurückdrängt.

FIG.1

FIG.2

# FIG. 3

# FIG. 5

# FIG. 4

# FIG. 10

FIG.6a

FIG.6b

FIG.6c

FIG.7a

FIG.7b

FIG.7c

FIG.7d

FIG.8

FIG.9

FIG. 11

FIG.12